**Europäisches Patentamt**

**European Patent Office**

**Office européen des brevets**

(19)

(11) Veröffentlichungsnummer : **0 189 410 B1**

(12) **EUROPÄISCHE PATENTSCHRIFT**

(45) Veröffentlichungstag der Patentschrift :
30.09.87

(51) Int. Cl.⁴ : **B 62 D 1/18, B 60 R 21/02**

(21) Anmeldenummer : **84903744.5**

(22) Anmeldetag : **12.10.84**

(86) Internationale Anmeldenummer :
**PCT/DE 84/00211**

(87) Internationale Veröffentlichungsnummer :
**WO/8501709 (25.04.85 Gazette 85/10)**

(54) **SICHERHEITSEINRICHTUNG FÜR FAHRZEUGE.**

(30) Priorität : **13.10.83 DE 3337231**

(43) Veröffentlichungstag der Anmeldung :
**06.08.86 Patentblatt 86/32**

(45) Bekanntmachung des Hinweises auf die Patenterteilung : **30.09.87 Patentblatt 87/40**

(84) Benannte Vertragsstaaten :
**DE FR GB SE**

(56) Entgegenhaltungen :
**DE-A- 1 655 597**
**DE-A- 3 111 045**
**FR-A- 1 594 234**
**FR-A- 2 219 867**
**FR-A- 2 289 367**
**FR-A- 2 324 321**
**FR-A- 2 370 601**

(73) Patentinhaber : **AUDI AG**
**Postfach 220**
**D-8070 Ingolstadt (DE)**

(72) Erfinder : **VOLLMER, Elmar**
**Goethering 16**
**D-8071 Wettstetten (DE)**
Erfinder : **HOFMANN, Jens**
**Auto-Union-Ring 30**
**D-8071 Lenting (DE)**
Erfinder : **ADAM, Helmut**
**Heppstrasse 11**
**D-8070 Ingolstadt (DE)**

(74) Vertreter : **Engelhardt, Harald**
**Audi AG Postfach 2 20**
**D-8070 Ingolstadt (DE)**

EP 0 189 410 B1

## Beschreibung

Die Erfindung bezieht sich auf ein Fahrzeug mit einer Sicherheitseinrichtung gemäß dem Oberbegriff des Anspruchs 1.

Bei einem starken Frontaufprall eines Kraftfahrzeuges ist stets zu beobachten, daß der Lenker des Fahrzeuges trotz angelegtem Sicherheitsgurt mit dem Kopf auf das Lenkrad aufschlägt. Dies wird hervorgerufen entweder durch die starke Vorverlagerung des Oberkörpers oder bzw. zusätzlich durch den Umstand, daß beim Frontaufprall über die Lenksäule das Lenkrad in den Fahrgastraum geschoben wird. Um die Wirkungen des Kopfaufschlags zu reduzieren sind verschiedene Einrichtungen bekannt, bei denen bei einem Frontaufprall das Lenkrad aus dem möglichen Kopfaufschlagbereich wegbewegt wird. Dabei nutzt man meist die bei einem Aufprall auftretende Relativbewegung zwischen einem Bauteil der Sicherheitseinrichtung und der Fahrzeugkarosserie.

Aus der DE-OS 1 655 597 ist eine Sicherheitseinrichtung bekannt, bei der an einem längsverschieblich geführten Stoßfänger ein Seil befestigt ist, welches über Umlenkeinrichtungen zu einer die Lenksäule aufnehmenden Konsole geführt ist. Durch die besondere Gestaltung der Umlenkeinrichtungen wird erreicht, daß bei einer Längsverschiebung des Stoßfängers über das Seil Teile der Umlenkeinrichtung verformt werden und darüber indirekt die Lenksäule mit dem Lenkrad vom Fahrer wegbewegt wird.

Aus der FR-PS 2 289 367 ist eine Sicherheitseinrichtung bekannt, bei der ebenfalls über einen längsverschieblichen Stoßfänger das Lenkrad bei einem Frontaufprall in Richtung auf das Armaturenbrett weggezogen wird. Zur Übertragung sind Kolben-Zylinder-Einheiten vorgesehen, welche über eine Hydraulikleitung verbunden sind.

Der Erfindung liegt die Aufgabe zugrunde, eine gattungsgemäße Sicherheitseinrichtung so weiterzubilden, daß bei gleichbleibender oder verbesserter Zuverlässigkeit der Bauaufwand reduziert wird.

Die Aufgabe wird durch die kennzeichnenden Merkmale der Ansprüche 1 oder 2 gelöst.

Beim Stand der Technik wird als Auslösevorrichtung stets ein Stoßfänger eingesetzt, welcher zu diesem Zweck längsverschieblich geführt ist. Gemäß der vorliegenden Erfindung wird nicht eine kostenintensive separate Einrichtung (Stoßfänger-Schiebemechanismus und besondere Maßnahmen in Verbindung mit der Lenksäule) eingesetzt, um darüber das Wegziehen des Lenkrades zu bewirken. Es wird vielmehr die Relativverschiebung zwischen zwei vorhandenen, für diesen Zweck nicht besonders auszubildenden Bauteilen gezielt ausgenutzt. Dabei ist ein Bauteil das im Frontbereich des Fahrzeuges angeordnete Antriebsaggregat und das andere Bauteil ein sich an das Antriebsaggregat nach hinten anschließendes, außerhalb der Knautschzone gelegenes Karosseriebauteil. Dadurch, daß das Antriebsaggregat die Auslöseeinrichtung bildet, übernimmt ein vorhandenes Bauteil ohne Modifikation eine zusätzliche Funktion, so daß der Bauaufwand wesentlich reduziert wird.

Im Gegensatz zu den bekannten Lösungen wird durch die Verwendung des Antriebsaggregats als Auslösevorrichtung sichergestellt, daß das Lenkrad zum Schutz des Fahrers erst dann weggezogen wird, wenn ein größerer Aufprall vorliegt. Das Wirksamwerden der Sicherheitseinrichtung auch schon bei einem kleinen Aufprall — so wie es bei einer Auslösung über die Stoßfänger erfolgt — ist nicht sinnvoll, da dort der Schutz nicht benötigt wird und außerdem Reparaturen anfallen können, um die Sicherheitseinrichtungen wieder in die Ausgangslage zurückzubringen.

Die erfindungsgemäße Ausbildung erlaubt im Gegensatz zum Stand der Technik ohne Probleme den Einsatz an sich bekannter Stoßfängersysteme mit Pralldämpfern, so wie sie derzeit bei fast allen US-Fahrzeugen Verwendung finden.

Schließlich wird dadurch, daß der Mechanismus für die Sicherheitseinrichtung nach dem Antriebsaggregat angeordnet ist, viel Platz eingespart und je nach baulichen Gegebenheiten eine solche Sicherheitseinrichtung überhaupt erst möglich. Bei den vorgenannten Sicherheitseinrichtungen ist es erforderlich, stets vom Stoßfängerbereich durch den gesamten Motorraum Leitungen zu legen. Bei den Leitungen besteht außerdem die Gefahr, daß diese beim Aufprall Schaden nehmen.

Zusammenfassend wird durch die Erfindung eine Sicherheitseinrichtung mit absoluter Funktionssicherheit geschaffen, welche vorhandene Bauteile (Motor, Getriebe) mit verwendet, um platzsparend, besonders leicht und auch kostengünstig zu bauen.

Günstig ist es, wenn die Sicherheitseinrichtung das Lenkrad etwa senkrecht zu der von ihm umschlossenen Fläche in Richtung auf die Fahrzeugfront wegzieht. Diese Bewegungsrichtung läßt sich sehr einfach beherrschen und bewirkt, daß das Lenkrad in Anlage an die Armaturentafel gelangt oder gar in diese eindringt.

Durch die Nutzung der Relativbewegung zwischen Aggregat und Fahrgastzelle beim Frontaufprall steht eine sehr hohe Kraft und ein ausreichender Weg zur Verfügung. Von Vorteil ist dabei die Proportionalität der Kraft zur Aufprallenergie. Auch der direkte Zusammenhang zwischen Verschiebeweg und der Wucht des Aufpralls kommt der Einrichtung zugute. Die Relativbewegung zwischen dem Aggregat und der Karosserie — insbesondere des Fahrgastraumes — kommt zustande, da sich schon kurze Zeit nach dem Frontaufprall das Aggregat am Hinternis abstützt und sich die Karosserie noch über das Aggregat schiebt.

Der Verschiebeweg wird mittels eines Seiles auf das Lenkrad übertragen. Es versteht sich, daß dabei eine Umlenkung vorgenommen werden muß, da das Lenkrad entgegen der Bewegungsrichtung des Aggregats bewegt werden soll. Die Umlenkung kann gemäß Anspruch 1 beispielsweise durch eine am Karosseriebauteil befestigte Rolle oder einen Rohrbogen erfolgen. Die Umlenkung des Seiles wird zweckmäßig an einer Stelle mit geringem Verformungsweg vorgenommen. Ist dies nicht oder nur bedingt möglich, dann läßt sich der geringere Verformungsweg des die Umlenkung aufnehmenden Karosseriebauteils bei der Seilabstimmung berücksichtigen. Durch das Seil ist es insgesamt möglich, sehr hohe Kräfte zu übertragen und Toleranzen auszugleichen.

Die Lösung gemäß Anspruch 2 stellt sicher, daß bei einer nur geringen Eindringung des Aggregats in die Fahrzeugkarosserie ein ausreichend großer Verschiebeweg durch die flaschenzugartige Seilverlegung erreicht wird. Eine geringe Aggregateeindrückung kann beispielsweise dann auftreten, wenn der Vorbau relativ steif ist oder als Aggregat ein quer eingebauter Motor dient. Die gewünschte Übersetzung kann dadurch erreicht werden, daß das dem Lenkrad abgewandte Ende des Seiles nicht am Aggregat, sondern an einer massiven Karosseriestelle befestigt ist und das Seil eine Schlaufe bildet, in welche das rückwärtige Ende des Aggregates oder ein daran ausgebildeter Ausleger stößt.

Bezüglich der Seilauslegung ist es zweckmäßig, daß Seillose vorgesehen wird, welche bei einer festgelegten maximalen Aggregateeindringung den maximalen Lenkradweg festlegt. Dadurch wird einem Reißen des Seiles vorgebeugt und eine unerwünschte Lenkradrückfederung vermieden. Es ist jedoch auch möglich, einen Zugkraftbegrenzer, welcher ein definiertes Abreißen oder Dehnen des Seiles bewirkt, vorzusehen. Dabei ist es von Vorteil, wenn das Seil zwischen seiner Befestigung an einem mit dem Lenkrad verbundenen Bauteil und dem Zugkraftbegrenzer zusätzlich an einem Karosserieteil festgeklemmt wird. Dadurch kann auch bei Verwendung eines Zugkraftbegrenzers, ebenso wie durch ein Dehnglied, eine Lenkradrückfederung verhindert werden.

Zwei Ausführungsbeispiele der Erfindung gemäß den Ansprüchen 1 und 2 sind in der Zeichnung dargestellt und werden nachfolgend näher beschrieben. Es zeigt

Figur 1   in schematischer Darstellung eine Sicherheitseinrichtung mit einem Seil zum Wegziehen des Lenkrades bei einem Frontaufprall und

Figur 2   ein Ausführungsbeispiel, bei welchem das Seil zur Erzielung einer Übersetzung anders geführt ist.

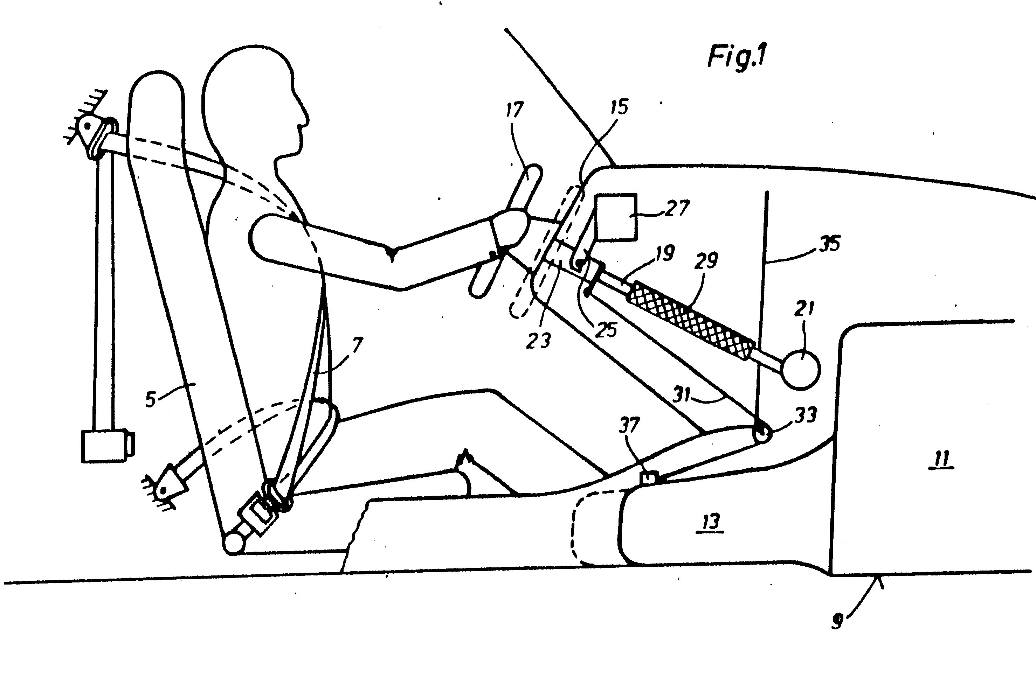

Fig. 1 zeigt schematisch den vorderen Innenraum eines Personenkraftwagens. Auf dem Fahrersitz 5 des Personenkraftwagens ist eine Person mittels eines bekannten Dreipunkt-Sicherheitsgurtes 7 gehalten. Das Antriebsaggregat 9 befindet sich im Bug des Fahrzeuges und besteht aus einem längs eingebautem Motor 11, an den sich nach hinten ein Getriebe 13 anschließt.

Wie aus Fig. 1 unmittelbar ersichtlich, ist etwa parallel zu einem Armaturenbrett 15 ein Lenkrad 17 angeordnet, welches über eine Lenksäule 19 mit einem Lenkgetriebe 21 in Verbindung steht.

Das nicht drehbare Lagerteil 23 ist durch eine Lasche 25 an einem im Bereich des Armaturenbretts 15 angeordneten Querträger 27 festgelegt. Die Anbindung des Lagerteiles 23 an die Lasche 25 ist so gewählt, daß ein Ausklinken möglich ist.

Um eine axiale Verschiebung der Lenksäule 19 und damit des Lenkrades 17 zu ermöglichen, umfaßt die Lenksäule 19 einen Abschnitt, welcher aus einem Gitterrohr 29 besteht und bei einer vorbestimmten Belastung eine axiale Verschiebung zuläßt.

Am Lagerteil 23 der Lenksäule 19 ist schließlich ein Seil 31 befestigt, welches bis zu einer Umlenkrolle 33 im Bereich der Stirnwand 35 des Fahrzeuges bis zu einer Befestigungsstelle 37 am Getriebe 13 geführt ist.

Bei einem Frontaufprall stützt sich bereits bei geringer Verformung des Fahrzeugbugs das Aggregat 9 am Hindernis ab und die leichter verformbare Karosserie schiebt sich über das Antriebsaggregat 9. Dadurch kommt eine Relativbewegung zwischen dem Antriebsaggregat 9 und der Fahrzeugkarosserie zustande (gestrichelt dargestellt). Diese Relativverschiebung wird durch das am Getriebe 13 festgelegte Seil 31 über das Lagerteil 23 auf das Lenkrad 17 übertragen, wodurch dieses in das Armaturenbrett 15 gezogen wird. Parallel zu diesem Bewegungsablauf klinkt die Lasche 25 am Lagerteil 23 aus ; gleichzeitig wird das Gitterrohr 29 in axialer Richtung zusammengestaucht.

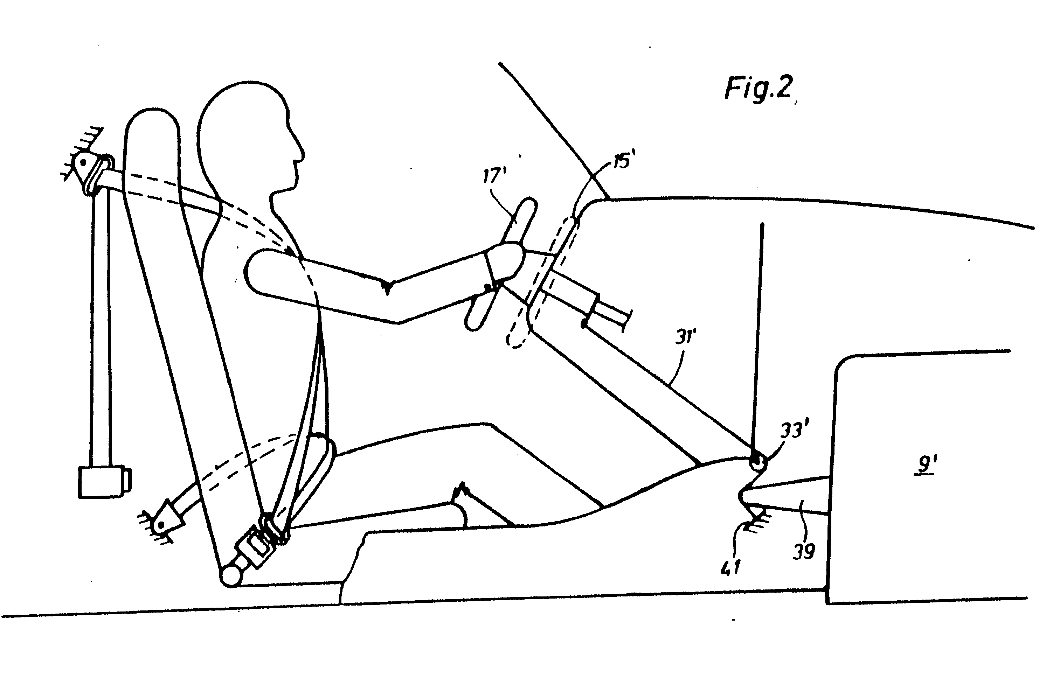

Das Ausführungsbeispiel nach Fig. 2 ist ähnlich aufgebaut, so daß nur auf die Unterschiede eingegangen zu werden braucht. Für die gleichen oder ähnlichen Teile werden deshalb die selben Bezugszeichen, jedoch mit einem Strich versehen, verwendet.

Bei dem zweiten Beispiel lag das Problem zugrunde, daß durch einen relativ steifen Vorbau des Fahrzeuges mit einem Quermotor bei einem Frontaufprall nur eine geringe Relativbewegung auftritt, welche das Lenkrad 17' nicht ausreichend weit auf das Armaturenbrett 15' zuzubewegen vermag. Es ist deshalb eine Übersetzung vorgesehen, welche durch eine andere Anbindung des Seiles 31' ermöglicht wird. Das Seil 31' wird nicht am Antriebsaggregat 9' angebunden, sondern unmittelbar an einem möglichst starren Teil der Karosserie. Das Antriebsaggregat 9' trägt einen Dorn 39, welcher auf das Seil 31' zwischen der Umlenkrolle 33' und seiner Befestigung an der Fahrzeugkarosserie bei 41 einwirkt. Durch diese Übersetzung wird erreicht, daß bei einer bestimmten Relativverschiebung zwischen Antriebsaggregat 9' und Fahrzeugkarosserie ein doppelt so hoher Weg zum Wegziehen des Lenkrades 17' zur Verfügung steht.

**Patentansprüche**

1. Fahrzeug mit einem in seinem Frontbereich angeordneten Antriebsaggregat (9) und einer Sicherheitseinrichtung, durch welche bei einem Frontaufprall das Lenkrad (17) mittels eines über eine Umlenkvorrichtung (33) geführten Seiles aus dem möglichen Kopfaufschlagbereich in Richtung auf das Armaturenbrett (15) gezogen wird, gekennzeichnet durch folgende Merkmale :

a) das dem Lenkrad (17) abgewandte Ende des Seites (31) ist am Antriebsaggregat (9) befestigt,

b) das Antriebsaggregat (9) ist derart im Fahrzeug angeordnet, daß der die Seilbefestigung aufweisende Bereich des Antriebsaggregats unter einem eine Knautschzone bildenden Karosserieabschnitt des Fahrzeuges liegt,

c) das Seil (31) ist von seiner Befestigungsstelle (37) am Antriebsaggregat (9) in Fahrtrichtung des Fahrzeugs nach vorne geführt und wird an einem ebenfalls außerhalb der Knautschzone gelegenen Karosseriebauteil (35) umgelenkt,

d) von der Umlenkstelle ist das Seil (31) derart zu einem mit dem Lenkrad (17) in Verbindung stehenden Bauteil geführt und an diesem befestigt, daß bei einer durch einen Frontaufprall bestimmter Größe bedingten Relativverschiebung zwischen dem Antriebsaggregat (9) und dem außerhalb der Knautschzone gelegenen Karosserieabschnitt über das Seil (31) das Lenkrad (17) etwa senkrecht zu der von ihm umschlossenen Fläche in Richtung auf das Armaturenbrett (15) gezogen wird.

2. Fahrzeug nach dem Oberbegriff des Anspruchs 1 dadurch gekennzeichnet, daß das dem Lenkrad (17') abgewandte Ende des Seiles (31') an einem sich an das Antriebsaggregat (9') nach hinten · anschließenden, außerhalb der Knautschzone des Fahrzeuges gelegenen Karosseriebauteil (41) befestigt ist, daß das Seil (31') an einem eben solchen Karosseriebauteil umgelenkt wird und daß beim Frontaufprall ein Teil (39) des Antriebsaggregats (9') auf den Seilabschnitt zwischen der karosserieseitigen Befestigungsstelle (41) und der Umlenkstelle (33') einwirkt.

3. Fahrzeug nach Anspruch 1 oder 2, dadurch gekennzeichnet, daß das Seil (31, 31') mit einem Zugkraftbegrenzer versehen ist.

4. Fahrzeug nach Anspruch 3, dadurch gekennzeichnet, daß dem Seil (31, 31') ein die Verbindung trennender oder dehnender Zugkraftbegrenzer zwischengeschaltet ist und eine Klemmeinrichtung vorgesehen ist, welche bei getrennter oder gedehnter Verbindung ein Rückfedern des Lenkrades (17, 17') unterbindet.

**Claims**

1. Vehicle with a drive or power unit (9) situated in its front region and with a safety device whereby in the event of a head-on impact the steering wheel (17) is drawn out of the possible head impact region towards the dashboard (15) by means of a cable which is guided over a deflection device (33), characterised by the following features :

a) that end of the cable (31) which is remote from the steering wheel (17) is secured to the power unit (9),

b) the power unit (9) is so arranged in the vehicle that the power unit region comprising the cable securing point is below a body part of the vehicle which forms a crumple zone,

c) from the point (37) at which it is secured to the power unit (9) the cable (31) is taken forwards in the direction of travel of the vehicle, and is deflected at a body component (35) which is also situated outside of the crumple zone,

d) from the deflection point the cable (31) is so taken to a component connected to the steering wheel (17) and secured to this component that in the event of a relative displacement between the power unit (9) and the body component situated outside of the crumple zone caused by a head-on collision of a specific magnitude the steering wheel (17) is drawn by means of the cable (31) in the direction towards the dashboard (15), approximately at right angles to the plane enclosed by the said steering wheel.

2. Vehicle according to the pre-characterising part of claim 1, characterised in that the end of the cable (31') which is remote from the steering wheel (17') is secured to a body component (41) which is adjacent the rear of the power unit (9') and which is situated outside of the crumple zone of the vehicle, that the cable (31') is deflected at a similar body component, and that in the event of a head-on impact a part (39) of the power unit (9') acts on the portion of cable between the point (41) of fixing to the body and the deflection point (33').

3. Vehicle according to claim 1 or 2, characterised in that the cable (31, 31') is provided with tensile force limiting means.

4. Vehicle according to claim 3, characterised in that there is interposed in the cable (31, 31') a tensile force limiting means which separates or expands the connection, and a clamping device is provided which inhibits springing-back of the steering wheel (17, 17') when the connection is separated or expanded.

**Revendications**

1. Véhicule comportant un groupe moteur (9) disposé dans sa partie avant et un dispositif de sécurité par lequel, en cas de collision frontale, le volant (17) est tiré en direction du tableau de bord (15) à l'écart de la région où la tête du conducteur risque de le heurter, au moyen d'un câble guidé sur un dispositif de renvoi, caractérisé par les dispositions suivantes :

a) l'extrémité du câble (31) du côté opposé au volant (17) est fixée au groupe moteur,

b) le groupe moteur (9) est monté sur le véhicule de telle manière que la région du groupe moteur qui présente le point de fixation du câble se trouve au-dessous de la partie de la carrosserie qui constitue une zone déformable,

c) le câble (31) est guidé vers l'avant dans le sens de marche du véhicule, à partir de son point de fixation (37) au groupe moteur (9), et il est renvoyé sur un élément de carrosserie (35) qui se trouve également en dehors de la zone déformable,

    d) à partir du point de renvoi, le câble (31) est guidé vers un élément de construction qui est en liaison avec le volant (17), et il est fixé à cet élément, de telle manière qu'en cas de déplacement relatif entre le groupe moteur (9) et la partie de la carrosserie se trouvant en dehors de la zone déformable, déplacement qui résulte d'une collision frontale d'une certaine importance, le volant (17) soit tiré par le câble (31) en direction du tableau de bord (15), à peu près perpendiculairement à la surface circonscrite par lui.

    2. Véhicule selon le préambule de la revendication 1, caractérisé en ce que l'extrémité du câble (31') du côté opposé au volant (17') est fixée à un élément de carrosserie (41) faisant suite vers l'arrière au groupe moteur (9') et se trouvant en dehors de la zone déformable du véhicule, en ce que le câble (31') est renvoyé sur un élément de carrosserie similaire et en ce qu'en cas de collision frontale, une partie (39) du groupe moteur (9') agit sur le segment du câble situé entre le point (41) de fixation du côté carrosserie et le point de renvoi (33').

    3. Véhicule selon la revendication 1 ou 2, caractérisé en ce que le câble (31, 31') est muni d'un limiteur de force de traction.

    4. Véhicule selon la revendication 3, caractérisé en ce qu'il est intercalé, dans le câble (31, 31'), un limiteur de force de traction qui supprime ou allonge la jonction, et en ce qu'il est prévu un dispositif de blocage qui, en cas de suppression ou d'allongement de la jonction, empêche un retour élastique du volant (17, 17').

Fig.1

0 189 410

Fig.2

0 189 410